# EUROPÄISCHE PATENTSCHRIFT

(11) **EP 1 758 759 B1**
(45) Veröffentlichungstag und Bekanntmachung des Hinweises auf die Patenterteilung: **30.12.2009**
(21) Anmeldenummer: 05735635.4
(22) Anmeldetag: 28.04.2005
(51) Int. Cl.: B60N 2/22, B60N 2/16, B60N 2/06, B60N 2/48

(54) **SITZVERSTELLVORRICHTUNG, SOWIE VERFAHREN ZUM BETREIBEN EINER SOLCHEN**
SEAT ADJUSTING DEVICE AND METHOD FOR THE OPERATION THEREOF
DISPOSITIF DE REGLAGE D'UN SIEGE ET PROCEDE PERMETTANT DE LE FAIRE FONCTIONNER

(30) Priorität: 17.06.2004 DE 102004029167
(43) Veröffentlichungstag der Anmeldung: 07.03.2007
(73) Patentinhaber: ROBERT BOSCH GMBH, 70442 Stuttgart (DE)
(72) Erfinder: GENTER, Gerhard, 77855 Achern (DE); HARTZ, Guenter, 77830 Buehlertal (DE); KRUEGER, Hartmut, 77830 Buehlertal (DE); BOLZ, Martin-Peter, 77815 Buehl (DE); BLOCHING, Helmut, 77815 Buehl-Eisental (DE); RUFF, Lothar, 77830 Buehlertal (DE)
(86) Internationale Anmeldenummer: PCT/EP2005/051942
(87) Internationale Veröffentlichungsnummer: WO 2005/123445

(56) Entgegenhaltungen:
- WO-A-01/92052
- DE-A1- 10 016 618
- DE-A1- 10 125 747
- DE-B3- 10 327 640

## Beschreibung

### Stand der Technik

Die Erfindung betrifft eine Sitzverstellung; insbesondere für Kraftfahrzeugsitze, sowie ein Verfahren zum Betreiben einer solchen nach der Gattung der unabhängigen Ansprüche 1, 11, 14 und 15.

Mit der DE 100 16 618 A1, die alle Merkmale des Oberbegriffs des Anspruchs 1 offenbart, ist ein beidseitig wirkender Antrieb zur Erzeugung einer Drehbewegung bekannt geworden, wie er zur manuellen Sitzverstellung im Kraftfahrzeug verwendet wird. Ausgehend von einer Nullpunktlage eines schwenkbaren Antriebhebels lässt sich der Antrieb dabei wahlweise in die eine oder die andere Drehrichtung drehen. Der Antrieb weist ein Abtriebselement auf, das nur dann gedreht wird, wenn sich der Antriebshebel von der Nullpunktlage wegbewegt, während bei einer Bewegung des Antriebshebels zu der Nullpunktlage hin das Abtriebselement nicht mitgenommen wird. Dabei wird nach dem Ratschenprinzip ein manuell erzeugtes Drehmoment auf das Abtriebselement übertragen. Die Rückstellung des Antriebshebels erfolgt hierbei über ein Federelement, das als Druckfeder ausgebildet ist.

Aus der EP 1209366 B1 ist ein pneumatischer Aktuator bekannt, der einen axial und radial elastischen Schlauch umfasst, der durch Druckbeaufschlagung seinen Durchmesser vergrößert und dadurch seine Länge verkürzt. Diese Längenänderung wird zum Öffnen einer Motorhaube eines Kraftfahrzeugs verwendet. Nachteilig hierbei ist, dass der pneumatische Aktuator nur eine einmaligen Verstellweg um die Längedifferenz des Schlauchs bewirkt. Ebenso kann bei einer solchen Ausführung nur eine Drehung in die eine Richtung (Öffnen der Motorhaube) mittels des pneumatischen Aktuator getätigt werden.

### Vorteile der Erfindung

Die erfindungsgemäße Sitzverstellvorrichtung, sowie das Verfahren zur Betätigung einer solchen mit den kennzeichnenden Merkmalen der unabhängigen Ansprüche haben den Vorteil, dass durch die Anordnung der pneumatischen Linearaktuatoren an dem Verbindungselement des Drehantriebs ein Ratschenmechanismus automatisch betätigt wird, der einen Drehantrieb in beide Richtungen betätigen kann. Dadurch kann ein Sitzteil oder ein Fahrzeugsitz in beide Richtungen, beispielsweise vor und zurück oder hoch und runter, betätigt werden. Da der Linearaktuator an den Ratschenmechanismus gekoppelt ist, können durch das mehrmalige Betätigen des Linearaktuators Drehungen um einen beliebigen Winkel, und damit um einen beliebigen Verstellweg des Sitzteils erzeugt werden. Da in vielen Kraftfahrzeugen standardmäßig eine pneumatische Druckversorgung bereits vorhanden ist, entfällt hierbei eine Vielzahl von Elektromotoren bei der automatischen Sitzverstellung. Solche pneumatischen Linearantriebe sind aufgrund des flexiblen Schlauchs variabler im Sitz einzubauen und haben ein geringeres Gewicht als vergleichbare Elektromotoren. Der erfindungsgemäße pneumatische Linearantrieb kann besonders günstig für bestehende Sitzgestelle verwendet werden, die bisher manuell verstellt werden. Ein weiterer Vorteil der pneumatischen Linearaktuatoren ist deren geringe Geräuschbildung, wodurch der Fahrkomfort des Kraftfahrzeuges verbessert wird.

Durch die in den Unteransprüchen aufgeführten Maßnahmen ergeben sich vorteilhafte Weiterbildungen und Verbesserungen der in den unabhängigen Ansprüchen angegeben Merkmale. Zur Anbindung der Linearaktuatoren an den Drehantrieb eignet sich besonders ein Ratschenhebel mit einem freien Ende oder ein Ratschenhebel mit zwei gegenüberliegenden Hebelarmen bzw. ein bewegliches Kraftübertragungsmittel, wie ein Zahn- oder Keilriemen mit zwei Enden.

Weist das Verbindungsmittel zwei gegenüberliegende Enden auf, kann an jedem Ende vorteilhaft ein pneumatischer Linearaktuator befestigt werden, wobei das andere Ende des Aktuators an einem starren Bezugspunkt befestigt wird. Wird der Aktuator mit Druck beaufschlagt, übt dieser jeweils eine Zugkraft auf das Verbindungsmittel auf, wodurch der Drehantrieb in Drehung versetzt wird. Hierbei können die beiden Linaraktuatoren in platzsparender Weise in etwa parallel angeordnet werden.

Weist das Verbindungsmittel nur ein Ende auf, beispielsweise ein einendiger Ratschenhebel, können an diesem Ende zwei oder mehrere Linearaktuatoren gegenüberliegend angeordnet werden. Dabei wird der eine Linearaktuator entspannt, während sich der andere zusammenzieht. Bei dieser Ausführung können die Linearaktuatoren praktisch direkt in einem manuellen Ratschenmechanismus integriert werden.

Anstelle zweier entgegengesetzt wirkender pneumatischer Linearaktuatoren kann auch einer der beiden durch ein Federelement ersetzt werden, das die Rückstellung des Verbindungselements entgegen der Längenkontraktion des einen Linearaktuators bewirkt. Ein solches Federelement kann einfach an die Längenänderung des Linearaktuators angepasst werden und ist deutlich billiger in der Fertigung als der zweite Linearaktuator.

Um eine Bewegung des Drehantriebs beim Einwirken eines Drehmoments von der Abtriebsseite (Sitzteil) zu verhindern, weist der Ratschenmechanismus eine neutrale Nullpunktlage auf, in der der Drehantrieb eine Selbsthemmung aufweist Ausgehend von dieser neutralen Nullpunktlage kann das Verbindungselement in zwei unterschiedliche Endpositionen verstellt werden, wodurch jeweils eine Drehung des Drehantriebs in die eine oder in die andere Richtung erfolgt.

In einer alternativen Ausführung weist der Ratschenmechanismus nur einen einzigen Drehbereich zwischen zwei Endstellungen auf, wobei bei der Betätigung des Verbindungselements in eine Richtung der Drehantrieb in eine Richtung verstellt wird, während dieser in der entgegengesetzten Richtung einen Freilauf aufweist. Die Drehmomentübenragungsrichtung mit dem entgegengesetzten Freilauf kann mechanisch in der Richtung geändert werden, so dass der eine Drehbereich für eine Verstellung der Sitzteile in entgegengesetzte Richtungen verwendbar ist.

Besonders günstig ist es, die Drehmoment-Übertragungsrichtung des Ratschenmechanismus ebenfalls mittels eines pneumatischen Linearaktuators zu betätigen, wobei dieser ggf. durch ein elastisches Rückstellelement ergänzt wird.

Zur Betätigung der Linearaktuatoren sind diese mit einem Steuergerät verbunden, das die Druckbeaufschlagung der Linearaktuatoren über ein oder mehrere Ventileinheiten regelt. Sind für die Sitzverstellung größere Verstellwege erforderlich, können diese durch mehrmaliges Betätigen der pneumatischen Linearaktuatoren nacheinander erzielt werden. Dabei kann über die Druckfrequenz und die Längenänderung der Linearaktuatoren eine quasikontinuierliche Verstellbewegung eingestellt werden.

Dabei können die Linearaktuatoren über Verbindungsleitungen direkt von einer Luftpumpe mit Druck beaufschlagt werden, oder von einem Druckspeicher versorgt werden, der wiederum mittels einer Pumpe auf einem bestimmten Druckniveau gehalten wird. Zur Entspannung des pneumatischen Linearaktuators kann dessen Druck einfach über ein Ventil an die Umgebung abgelassen werden.

Beim Verfahren zum Betreiben zweier entgegengesetzt wirkender pneumatischer Linearaktuatoren wird zur Verstellung des Verbindungselements in die eine Richtung der erste Linearaktuator mit Druck beaufschlagt, während der zweite Linearaktuator gleichzeitig entlüftet wird. Dadurch können auch Linearaktuatoren verwendet werden, die nur bei Kontraktion eine Kraft auf das Verbindungselement ausüben. Die Ausdehnung dieses Linearaktuators wird dann anschließend durch die Kontraktion des zweiten Linearaktuators oder eines Federelements bewirkt, die das Verbindungselement in die entgegengesetzte Richtung verstellen.

Sind an einem Verbindungselement zwei Linearaktuatoren angeordnet, die im Wechseltakt betrieben werden sollen, können diese besonders günstig zusammen mittels eines 4-Wege-3-Positionen-Ventils angesteuert werden, wobei die Frequenz des Taktwechsels vom Steuergerät vorgegeben wird.

Alternativ können die beiden Linearaktuatoren aber auch jeweils mittels zweier unabhängiger 3-Wege-3-Positionen-Ventilen, bzw. 3-Wege-2-Postitionen-Ventile mit der Druckversorgung verbunden sein.

Für die Betätigung des Ratschenmechanismus mit einer neutralen Nullpunktlage und zwei weiteren den beiden Drehrichtungen entsprechenden Endpositionen eignet sich besonders die Ansteuerung des mindestens einen Linearaktuators mittels eines Druckbegrenzungselements. Durch dieses kann ein Druckniveau vorgeben werden, mit dem der Linearaktuator beaufschlagt wird, und der einer bestimmten Längenkontraktion entspricht. Die erste Längendifferenz zwischen der teilweise kontrahierten Position des Linearaktuators und der völlig entspannten Position entspricht dabei dem ersten Ratschenbereich mit einer ersten Drehrichtung. Dabei wird mit der Entspannung des Linearaktuators ein Drehmoment auf den Drehantrieb übertragen, während dieser bei der anschließenden teilweisen Kontraktion einen Freilauf aufweist Zur Betätigung des zweiten Ratschenbereichs wird der Linearaktuator mit dem Maximaldruck beaufschlagt, der einer maximalen Längenkontraktion entspricht. Bei der Entspannung auf den voreingestellten Zwischendruck wirkt wiederum ein Freilauf, so dass in diesem Arbeitsbereich der Drehantrieb in die zweite Richtung betrieben werden kann.

Durch die Verwendung eines dem Linearaktuator entgegenwirkendem Rückstellelement, kann vorteilhaft ein Linearaktuator eingesetzt werden, der nur bei dessen Kontraktion eine Zugkraft generiert, da das Federelement dessen Ausdehnung bewirkt. Dadurch lassen sich für den ganzen Sitz die Hälfte aller Linearaktuatoem einschließlich derer pneumatischer Druckversorgung einsparen.

Durch die Ansteuerung des Linearaktuator mittels einer Ventileinheit, die ein Druckbegrenzungselement aufweist, kann ohne elektronische Druckregelung eine definierte Teilkontraktion des Linearaktuators erzielt werden. Dabei kann ein eingestellter Druck auch bei hoher Druck-Frequenz exakt wiederholt werden, ohne dass dazu ein Drucksensor nötig ist

### Zeichnungen

In den Zeichnungen sind mehrere Ausführungsbeispiele erfindungsgemäßer Sitzverstellvotrichtungen dargestellt und in der nachfolgenden Beschreibung näher erläutert. Es zeigen:
Fig. 1 eine schematische Ansicht der Sitzverstellfunktionen,
Fig. 2 einen pneumatischen Linearaktuator,
Fig. 3 eine erfindungsgemäße Ratschenvorrichtung mit zwei Drehbereichen,
Fig. 4 einen erfindungsgemäßen Ratschenmechanismus mit umschaltbarer Drehmomentübertragungsrichtung,
Fig. 5a) bis 5c) verschiedene erfindungsgemäße Anordnungen der Linearaktuatoren an einem Verbindungselement,
Fig. 6a) bis 6c) Variationen der Anordnungen aus Fig. 5a) bis 5c) mit Rückstellfedern,
Fig. 7 eine Ansteueranordnung für eine erfindungsgemäße Verstellfunktion,
Fig. 8 eine alternative Ventilanordnung zum Ausführungsbeispiel gemäß Fig. 7 und
Fig. 9 eine weitere Variation einer erfindungsgemäßen Sitzverstellvorrichtung.

### Beschreibung der Ausführungsbeispiele

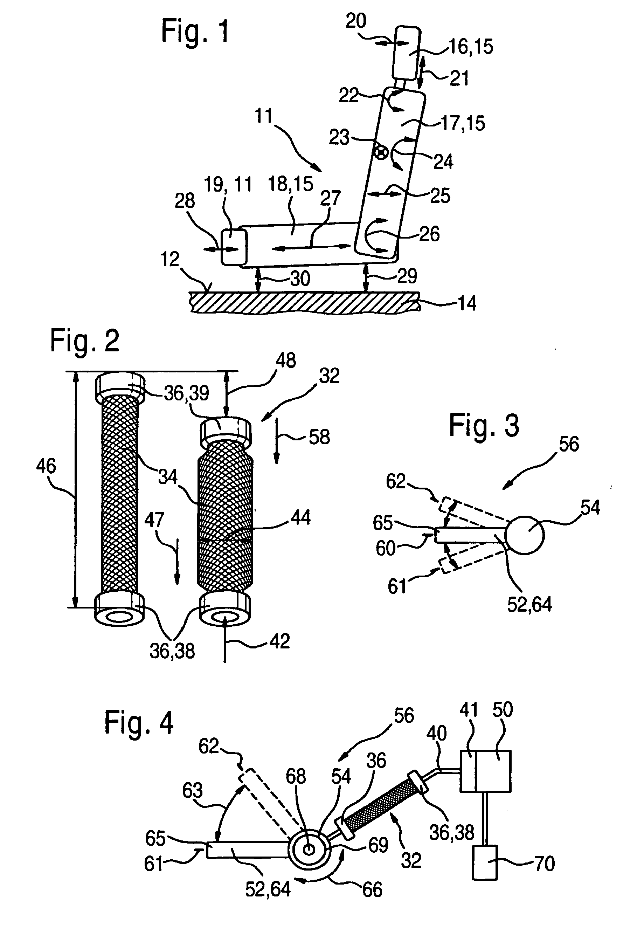

In Fig. 1 ist ein Fahrzeugsitz 11 dargestellt, der an einer Befestigungsfläche 12 einer Karosserie 14 befestigt ist Der Sitz 11 weist verschiedene Sitzteile 15, wie die Kopfstütze 16, die Rückenlehne 17, die Sitzfläche 18 oder die Sitzverlängerung 19 auf Diese Sitzteile 15 sind gegeneinander mit der erfindungsgemäßen Sitzverstellvorrichtung 10 zueinander beweglich angeordnet. Des weiteren kann der Sitz 11 als ganzes gegenüber der Befestigungsfläche 12 verstellt werden. Die erfindungsgemäßen Verstellfunktionen beziehen sich im einzelnen auf die Kopfstützenlängslage 20, die Kopfstützenhöhe 21, die Kopfstützenneigung 22, die Lehnenbreite 23, die Lehnenkissenlage 24, die Lordoseunterstützung 25, die Lehnenneigung 26, die Sitzlängslage 27, die Sitztiefe 28, die Sitzhöhe 29, sowie die Sitzneigung 30.

Die Sitzteile 15 bzw. der Sitz 11 werden mittels pneumatischen Linearaktuatoren 32 verstellt, wie sie in Fig. 2 dargestellt sind. Der Linearaktuator 32 weist einen flexiblen Schlauch 34 auf, an dessen beiden Enden die Endstücke 36 angeordnet sind. Ein Endstück 36 bildet einen Anschluss 38 für pneumatische Versorgungsleitungen 40. Wird der Linearaktuator 32 über den Anschluss 38 mit einem Druck 42 beaufschlagt, zieht sich der Schlauch 34 zusammen, was mit einer Ausdehnung seines Durchmessers 44 verbunden ist Als Medium für die Erzeugung des Drucks 42 wird beispielsweise Luft verwendet, die mittels einer Pumpe 50 komprimiert wird. In entspanntem Zustand weist der Linearaktuator 32 eine maximale Länge 46 auf, die bei Druckbeaufschlagung um eine Längenänderung 48 entlang einer Axialrichtung 47 reduziert wird. Die Längenänderung 48 kann je nach verwendetem Material des flexiblen Schlauchs 34 bis zu 25 Prozent der maximalen Länge 46 betragen. Ist das Anschlussstück 38 an einem Sitzteil 15 fest fixiert, übt das gegenüberliegende Endstück 36 eine Zugkraft 58 auf ein damit verbundenes Verbindungselement 52 auf. Das zweite, dem Anschluss 38 gegenüberliegende Endstück 36 ist als druckdichtes Befestigungselement 39 ausgebildet, das beispielsweise mit dem Verbindungsmittel 52 eines Drehantriebs 54 verbunden ist, wie er in Fig. 3 dargestellt ist.

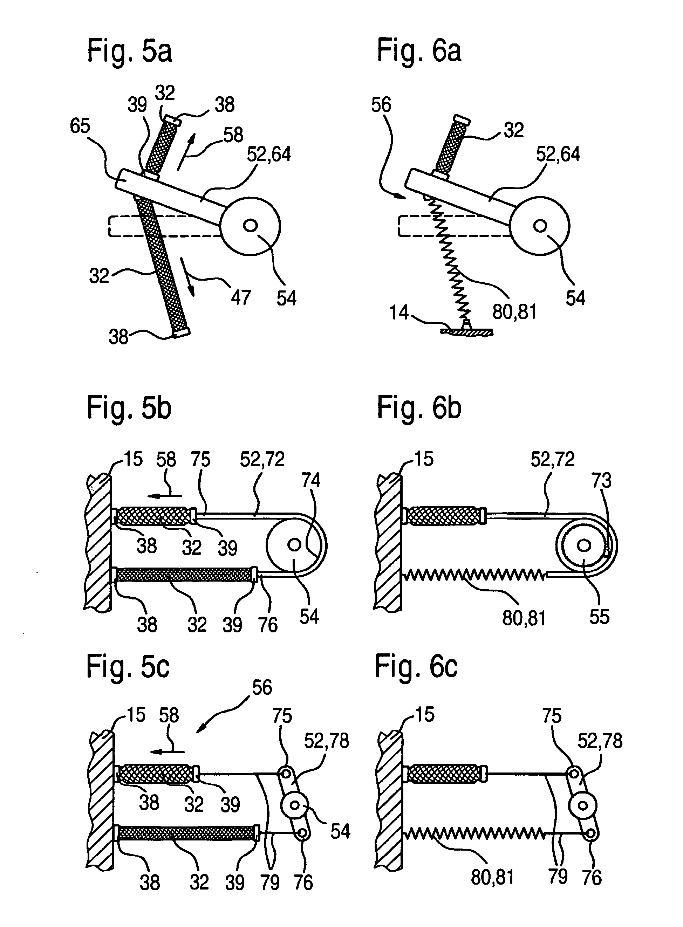

Fig. 3 zeigt einen Drehantrieb 54, der mit einem Ratschenmechanismus 56 verbunden ist und beispielsweise zwischen zueinander beweglich angeordneten Sitzteilen 15 angeordnet ist Der Ratschenmechanismus 56 weist hierbei eine neutrale Ruheposition 60 auf, in der die beiden Sitzteile 15 fest gegeneinander gesperrt sind. Das Verbindungselement 52 ist hierbei als Ratschenhebel 64 mit einem freien Ende 65 ausgebildet, das gemäß der Ausführung in Fig. 5a) mit pneumatischen Linearaktuatoren 32 verbunden ist. Wird das Verbindungselement 52 in eine erste Endposition 61 bewegt, wird dabei ein Drehmoment über ein Abtriebselement 55 des Drehantriebs 54 - bzw. eine Kraft über eine nachfolgende Verstell-Kinematik - auf ein Sitzteil 15 übertragen. Nach dem Ratschenprinzip weist der Ratschenmechanismus 56 bei der Rückstellung des Verbindungselements 52 aus der ersten Endlage 61 in die Ruheposition 60 einen Freilauf auf, so dass bei der Rückstellung des Ratschenhebels 64 kein Drehmoment übertragen wird. Dieser Vorgang kann mittels des mindestens einen Linearaktuators 32 beliebig oft wiederholt werden, bis das Sitzteil 15 die gewünschte Stellung erreicht hat. Soll das Sitzteil 15 in die entgegengesetzte Richtung zurückgestellt werden, wird das Verbindungselement 52 von der neutralen Ruheposition 60 in die zweite Endlage 62 bewegt. Dabei wird ein Drehmoment für den Drehantrieb 54 in die entgegengesetzte Richtung übertragen, wobei bei der Rückstellung aus der zweiten Endlage 62 in die neutrale Ruheposition 60 wiederum ein Freilauf wirkt. Durch die neutrale Ruheposition 60 ist bei einer solchen Ausführung immer gewährleistet, dass beim Einwirken eines Drehmoments oder einer Kraft von den Sitzteilen 15 auf den Drehantrieb 54 eine mechanische Selbsthemmung des Systems gegeben ist.

Fig. 4 zeigt eine alternative Ausführung eines Ratschenmechanismus 56, bei dem das Verbindungselement 52 nur innerhalb eines einzigen Drehbereichs 63 zwischen einer ersten und einer zweiten Endlage 61, 62 bewegt werden kann. Der Drehantrieb 54 weist ebenfalls eine Freilaufeinrichtung auf, so dass beim Zurückstellen des Ratschenhebels 64 von der zweiten Endlage 62 in die erste Endlage 61 kein Drehmoment übertragen wird. Da diese Vorrichtung keine neutrale Ruheposition 60 aufweist, muss die Drehmomentübertragungsrichtung 66 mittels eines Schalters 68 am Drehantrieb 64 umgeschaltet werden. Die Selbsthemmung des Systems erfolgt hierbei beispielsweise über eine Lastmomentsperre 69. Im Ausführungsbeispiel gemäß Fig. 4 wird die Drehmomentübertragungsrichtung 66 ebenfalls mittels eines pneumatischen Linearaktuators 32 umgeschaltet, der über pneumatische Versorgungsleitungen 40 und eine Ventileinheit 41 mit der Pumpe 50 verbunden ist. Die Sitzverstellvorrichtung 10 weist dabei eine Steuereinheit 70 auf, die die Aktivierung der Linearaktuatoren 32 sowohl des Ratschenhebels 64, als auch des Schalters 68 ansteuert.

In den Figuren 5a) bis 5c) sind verschiedene Ausführungsbeispiele einer Sitzverstellvorrichtung 10 abgebildet, bei der jeweils zwei pneumatische Linearaktuatoren 32 einander entgegenwirkend angeordnet sind. In Fig. 5a) ist das Verbindungselement 52 wie in Fig. 3 als Ratschenhebel 64 mit einem freien Ende 65 ausgebildet, an dem die beiden Linearaktuatoren 32 gegenüberliegend mit den Befestigungselementen 39 befestigt sind. Die pneumatischen Versorgungsleitungen 40, die mit den Anschlüssen 38 verbunden sind, sind hierbei nicht näher dargestellt. Bei Aktivierung der Linearaktuatoren 32 üben diese eine Zugkraft 58 entlang der Axialrichtung 47 auf das Verbindungselement 52 aus. In Fig. 5b) ist das Verbindungselement 52 als flexibles Zugmittel 72 ausgebildet, das über einen Formschluss 73 oder einen Reibschluss 74 mit dem Drehantrieb 54 zusammenwirkt. Das Zugmittel 72 weist dabei zwei freie Enden 75, 76 auf, die mit den als Befestigungselemente 39 ausgebildeten Endstücken 36 der Linearaktuatoren 32 verbunden sind. Die Linearaktuatoren 32 sind mit den anderen Endstücken 36, die als Anschlüsse 38 ausgebildet sind, fest mit einem Sitzteil 15, beispielsweise der Sitzlehne 17 verbunden. Der Drehantrieb 54 hingegen ist über das Abtriebselement 55 mit einem zweiten Sitzteil 15, beispielsweise der Kopfstütze 16 verbunden. Die Drehbewegung des Drehantriebs 54 kann dabei direkt zur Verstellung der Kopfstützenneigung 52 verwendet werden oder über ein nicht näher dargestelltes Getriebe, beispielsweise ein Spindelgetriebe in eine Kopfstützenhöhenverstellung 21 umgesetzt werden. In Fig. 5c) ist anstelle des Zugmittels 72 ein starrer Ratschenhebel 78 mit zwei radial gegenüberliegenden freien Enden 75, 76 nach dem Ratschenprinzip mit dem Drehantrieb 54 verbunden. Zwischen den Befestigungselementen 39 der Linearaldualoren 32 und den freien Enden 75, 76 sind flexible Kupplungselemente 79 angeordnet, um die Drehbewegung des Ratschenhebels 78 mit der Linearbewegung der pneumatischen Linearaktuatoren 32 zu koppeln.

Die Figuren 6a) bis 6c) zeigen jeweils Variationen der Ausführungsbeispiele gemäß der Figuren 5a) bis 5c), wobei jeweils ein Linearaktuator 32 durch ein elastisches Rückstellelement 80 ersetzt ist. Das Rückstellelement 80 ist einerseits - wie der Linearaktuator 32 - an einem Sitzteil 15 fest fixiert und andererseits mit dem Verbindungselement 52 verbunden. Das Rückstellelement 80 ist beispielsweise als Zugfeder 81 ausgebildet, die eine Zugkraft 58 auf dessen Befestigungselement 39 ausübt. Wird der Linearaktuator 32 entlüftet, bewirkt die Zugkraft 58 des Federelements 80 eine Rückstellung des Drehantriebs 54 über den Freilauf, und ggf. eine Streckung des Linearaktuators 32 auf seine maximale Länge 46. Sowohl die Ausführungsbeispiele nach Fig. 5a) bis 5c), als auch die Ausführungsbeispiele nach Fig. 6a) bis 6c) können jeweils nach dem Ratschenprinzip gemäß Fig. 3 mit einer neutralen Ruheposition 60, oder nach dem Ratschenprinzip nach Fig. 4 mit einem einzigen Drehbereich 63 ohne selbsthemmende Ruheposition 60 betrieben werden.

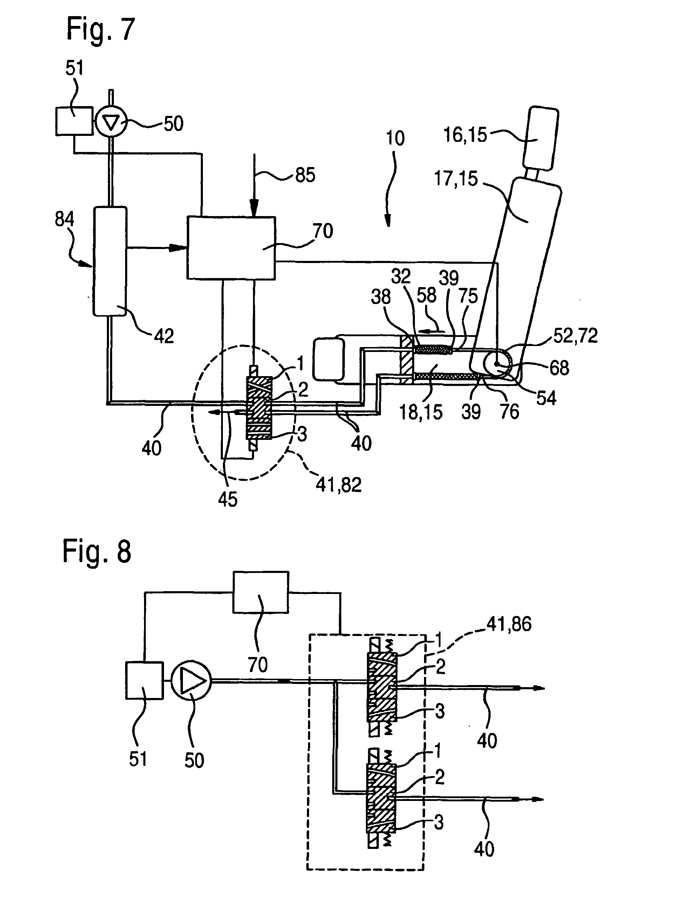

Anhand von Fig. 7 ist ein Verfahren zum Betreiben einer Sitzverstellvorrichtung 10 gemäß dem Ausführungsbeispiel nach Fig. 5b) mit einem Ratschenmechanismus 56 ohne neutrale Ruheposition 60 (Fig. 4) dargestellt. Die beiden Anschlüsse 38, die hier an der Sitzfläche 18 als Sitzteil 15 fixiert sind, sind über die pneumatische Versorgungsleitungen 40 mit der Ventileinheit 41 verbunden. Die Ventileinheit 41 ist hierbei als 4-Wege-3-Positionen-Ventil 82 ausgebildet (4/3-Ventil), an dem beide Linearaktuatoren 32 angeschlossen sind. In der dargestellten Ventil-Position 2 bleibt der Druck 42 in beiden Linearaktuatoren 32 unverändert, so dass augenblicklich keine Verstellung der Sitzteile 15 erfolgt Die Ventileinheit 41 ist über einen Druckspeicher 84 mit der Pumpe 50 verbunden, wobei ein Pumpenmotor 51 - ebenso wie die Ventileinheit 41 - von der Steuereinheit 70 angesteuert wird. Empfängt die Steuereinheit 70 ein Verstellsignal 85, schaltet diese die Ventileinheit 41 derart, dass einer der Linearaktuatoren 32 mit dem maximalen Druck 42 beaufschlagt wird, und der andere Linearaktuator 32 entlüftet wird, indem die Druckluft an die Umgebung 45 entweicht. Wird in Fig. 7 beispielsweise das Ventil 41 nach oben verschoben (Ventil-Posidon 3), wird der obere Linearaktuator 32 mit Druck 42 beaufschlagt. Dabei zieht sich dieser Linearaktuator 32 um die Längenänderung 48 zusammen, so dass die Zugkraft 58 über das Verbindungselement 52 auf den Drehantrieb 54 wirkt, wobei ein Drehmoment auf das Abtriebselement 55 übertragen wird. Nach der maximalen Kontraktion des oberen Linearaktuators 32 schaltet die Steuereinheit 70 das Ventil 41 ganz nach unten (Ventil-Position 1), so dass jetzt der obere Linearaktuator 32 komplett entlüftet wird, und gleichzeitig der untere Linearaktuator 32 mit maximalem Druck 42 beaufschlagt wird. Dabei zieht sich der untere Linearaktuator 32 um die Längenänderung 48 zusammen, während sich der obere Linearaktuator 32 komplett entspannt. Bei dieser Drehrichtung des Drehantriebs 54 wirkt nach dem Ratschenprinzip der Freilauf, so dass hierbei kein Drehmoment auf das Abtriebselement 55 übertragen wird. Die Steuereinheit 70 gibt nun die Taktfrequenz vor, mit der die Ventil-Positionen 1 und 3 gewechselt werden, wobei durch die Zeitdauer der Druckbeaufschlagung auch die Längenänderungen 48 der Linearaktuatoren 32 beeinflussbar ist Da die Linearaktuatoren 32 jeweils gegen die Umgebung 45 entlüftet werden, sorgt die Steuereinheit 70 dafür, dass über den Pumpenmotor 51 immer ein bestimmtes Druckniveau 42 im Druckspeicher 84 gehalten wird. Soll die Verstellrichtung der Sitzteile 15 umgekehrt werden, veranlasst die Steuereinheit 70 eine Betätigung des Schalters 68 zur Umkehr der Drehmomentübertragungsrichtung 66. Dies geschieht z. B. mittels eines weiteren Linearaktuators 32 gemäß der Ausführung nach Fig. 4.

Fig. 8 zeigt eine alternative Ventilanordnung 41 für das Ausführungsbeispiel gemäß Fig. 7, wobei das 4/3-Ventil durch zwei unabhängige 3/3-Ventile ersetzt ist. Hierbei können über die Steuereinheit 70 die beiden Linearaktuatoren 32 unabhängig mit Druck beaufschlagt oder entlüftet werden. Die Koordination und Taktung der beiden unabhängigen 3/3-Ventile 86 erfolgt hierbei ausschließlich über die Steuereinheit 70. Die Ventileinheit 41 wird in dieser Variation direkt von der Pumpe 50 mit Druckluft versorgt, wobei die Steuereinheit 70 die gewünschte Druckanforderung regelt. In einer alternativen Ausführung können anstelle der 3/3-Ventile 86 auch 3/2-Ventile verwendet werden, bei denen auf eine Unterbrechung der Druckluftzufuhr (Ventil-Position 2) für beide Linearakluatoren 32 gleichzeitig verzichtet wird.

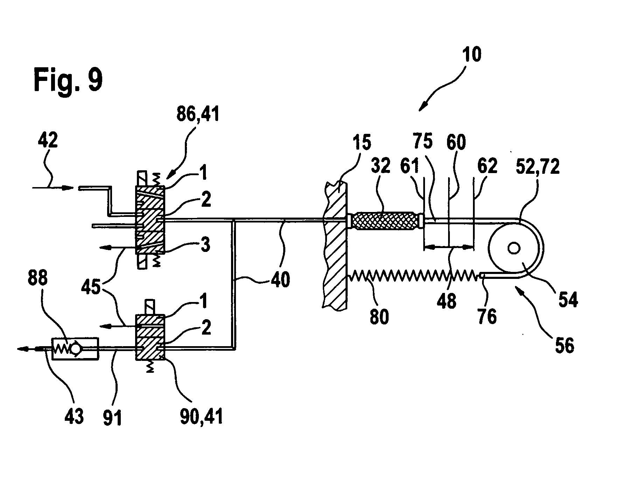

Anhand von Fig. 9 wird ein weiteres Verfahren zum Betreiben einer Sitzverstellvorrichtung 10 gemäß des Ausführungsbeispiels nach Fig. 6b) und einem Ratschenmechanismus 56 mit einer neutralen Ruheposition 60 gemäß Fig. 3 beschrieben. Das Verbindungselement 52 ist hierbei an seinem ersten Ende 75 nur mit einem pneumatischen Linearaktuator 32 und am anderen freien Ende 76 mit einer Rückstellfeder 80 verbunden. Da der Drehantrieb 54 in der neutralen Ruheposition 60 gehemmt ist, wird der Linearaktuator 32 für die beiden Drehmoment-Übertragungsrichtungen 66 in unterschiedlichen Druckbereichen betrieben, woraus eine unterschiedliche Längenänderung 48 des Linearaktuators 32 folgt. Damit die neutrale Ruheposition 60 eingehalten werden kann, muss eine bestimmte Länge des Linearaktuators 32 eingestellt werden, beispielsweise wird die maximale Länge 46 um die Hälfte der maximalen Längenänderung 48 reduziert. Bei dieser Länge ist der Linearaktuator 32 nur teilweise kontrahiert, was einem bestimmten Druckniveau 43 entspricht, das mit einer Druckbegrenzungseinheit 88 eingestellt wird, die mit der Ventileinheit 41 gekoppelt ist. Der Anschluss 38 ist hierzu über ein 3/3-Ventil 86 mit einer Druckversorgung 84 verbunden. Parallel zum 3/3-Ventil 86 ist ein weiteres Ventil 90, beispielsweise ein 2/2-Ventil angeordnet, dessen Entlüftungsausgang 91 mit der Druckbegrenzungseinheit 88 verbunden ist. Liegt an der Steuereinheit 70 kein Stellsignal 85 an, befinden sich beide Ventile 86 und 90 in einer Sperrstellung (Ventil-Position 2), in der der anliegende Druck gehalten wird. Soll ein Sitzteil 15 beispielsweise angehoben werden, entspricht dies einer Bewegung des Verbindungselements 52 von der neutralen Position 60 in die erste Endposition 61. Hierzu muss der Linearaktuator 32 kontrahieren, wozu das 3/3-Ventil 86 nach unten geschaltet (Ventil-Position 1) wird, um maximalen Druck 42 anzulegen. Gleichzeitig ist das untere 22-Ventil 90 gesperrt (Ventil-Position 2), so dass sich im Linearaktuator 32 der maximale Druck 42 mit einer maximalen Kontraktion 48 aufbaut. Für die Freilaufbewegung von der Endposition 61 in die neutrale Ruhelage 60 muss der Linearaktuator 32 wieder bis zu seiner neutralen Stellung 60 expandieren. Hierzu ist das Ventil 86 in der sperrenden Ventil-Position 2, während das 2/2-Ventil 90 den Druck 42 gegen das Druckbegrenzungselement 88 ablässt (Ventil-Position 1), wodurch sich im Linearaktuator 32 das Druckniveau 43 des Druckbegrenzungselements 88 einstellt. Dieser Vorgang kann zum Heben des Sitzteils 15 beliebig oft wiederholt werden.

Soll das Sitzteil 15 hingegen in die entgegengesetzte Richtung verstellt werden - beispielsweise gesenkt werden - muss das Verbindungselement 52 von der neutralen Ruheposition 60 in die zweite Endstellung 62 bewegt werden, wozu der Linearaktuator 32 maximal expandieren muss. Hierzu entlüftet das Ventil 86 den Linearaktuator 32 (Ventil-Position 3) gegen die Umgebung 45. Diese Entspannung des Linearaktuators 32 wird durch das Rückstellelement 80 unterstützt. Für die Freilaufbewegung aus der Endlage 62 zur neutralen Ruheposition 60 muss der Linearaktuator 32 wieder teilweise kontrahieren. Hierzu bleibt das Ventil 90 in der Druckbegrenzungsstellung (Ventil-Position 1), und das Ventil 86 ist eine definierte Zeit auf Ventil-Position 1 geschaltet, so dass hier der maximale Druck 42 anliegt Dadurch baut sich im Linearaktuator 32 ein Druck auf, der dem Druckniveau 43 der Druckbegrenzungseinheit 88 entspricht, wodurch sich das Befestigungselement 39 mit dem Ende 75 des Verbindungselements 52 in die neutrale Ruhelage 60 begibt Auch dieser Zyklus kann solange wiederholt werden, bis das Sitzteil 15 entsprechend des Anforderungsbefehls 85 gesenkt ist. Bei diesem Ausführungsbeispiel mit dem Zugmittel 72 als Verbindungselement 52 können vom pneumatischen Linearaktuator 32 nur Zugkräfte 58 auf den Drehantrieb 54 übertragen werden. Daher kann auch ein Linearaktuator 32 verwendet werden, der beispielsweise nur bei dessen Kontraktion eine Verstellkraft erzeugt, und dessen Expansion durch die korrespondierende Rückstellfeder 80, oder über einen zweiten Linearaktuator 32 gemäß Fig. 7 erzeugt wird.

Es sei angemerkt, dass hinsichtlich der in den Figuren und in der Beschreibung gezeigten Ausführungsbeispiele vielfältige Kombinationsmöglichkeiten der einzelnen Merkmale und Verfahrensschritte untereinander möglich sind. So kann beispielsweise die konkrete Anordnung und Ausgestaltung der Sitzteile 15 zueinander, des Drehantriebs 54 und der Verbindungselemente 52, sowie die Anordnung der Linearaktuatoren 32 und der elastischen Rückstellelemente 80 variiert werden. Ebenso kann der Ratschenmechanismus 56 bezüglich seiner neutralen Nullpunktslage 60 und der Drehrichtung des Freilaufs - oder dessen Richtungsumkehr - modifiziert werden. Die erfindungsgemäße Sitzverstellvorrichtung eignet sich besonders für die Modifikation eines manuellen Ratschenmechanismus 56 mit einer sperrenden neutralen Ruheposition und der optionalen Verwendung von elastischen Rückstellelementen 80. Die pneumatische Verstellvorrichtung kann ebenfalls sehr günstig mit einem pneumatischen Massage- oder Fahrdynamiksystem kombiniert werden.

## Patentansprüche

1. Sitzverstellvorrichtung (10) - insbesondere für Kraftfahrzeugsitze - mit zwei relativ zueinander und/oder gegenüber einer Befestigungsfläche (12, 14) beweglich angeordneterer Sitzteile (15, 16, 17, 18, 19), die über mindestens einen Ratschenmechanismus (56) miteinander verbunden sind, wobei der Ratschenmechanismus (56) einen beidseitig wirkenden Drehantrieb (54) aufweist, **dadurch gekennzeichnet, dass** der Drehantrieb (54) mittels eines Verbindungselements (52, 64, 72, 78) mit mindestens einem pneumatischen Linearaktuator (52) wirkverbunden ist, der bei Beaufschlagung mit einem Druck (42, 43) axial kontrahiert und dadurch den Drehantrieb (54) in Drehung versetzt.

2. Sitzverstellvorrichtung (10) nach Anspruch 1, **dadurch gekennzeichnet, dass** das Verbindungselement (52) als ein-endiger Ratschenhebel (64), oder als zwei-endiger Ratschenhebel (78) oder als Zugmittel (72) - wie beispielsweise ein Zahnriemen (72) oder eine Kette (72) - ausgebildet ist.

3. Sitzverstellvorrichtung (10) nach einem der Ansprüche 1 oder 2, **dadurch gekennzeichnet, dass** das Verbindungselement (52) gegenüberliegende Enden (75, 76) aufweist, an denen jeweils mindestens ein pneumatischer Linearaktuator (32) angeordnet ist, wobei mehrere pneumatische Linearaktuatoren (32) vorzugsweise in Axialrichtung (47) näherungsweise parallel angeordnet sind.

4. Sitzverstellvorrichtung (10) nach einem der vorhergehenden Ansprüche, **dadurch gekennzeichnet, dass** an einem einzigen Ende (65) des Verbindungselements (52) mindestens zwei pneumatischer Linearaktuatoren (32) angeordnet sind, wobei die beiden Linearaktuatoren (32) mit ihrer Längskontraktion einander entgegenwirken.

5. Sitzverstellvorrichtung (10) nach einem der vorhergehenden Anspruch, **dadurch gekennzeichnet, dass** an dem Verbindungselement (52) - insbesondere an einem Ende (65, 75, 76) desselben - ein elastisches Rückstellelement (80) angeordnet ist, das der Längskontraktion des mindestens einen pneumatischen Linearaktuators (32) entgegenwirkt.

6. Sitzverstellvorrichtung (10) nach einem der vorhergehenden Ansprüche, **dadurch gekennzeichnet, dass** der Ratschenmechanismus (56) eine neutrale Ruheposition (60) aufweist, in der die Bewegung der Sitzteile (15) gesperrt ist, und zwei Endpositionen (61, 62) für die beiden Drehrichtungen (66) aufweist, wobei sich insbesondere der Drehantrieb (54) nur dann entsprechend der jeweiligen Drehrichtung (66) dreht, wenn das Verbindungselement (52) von der Ruhelage (60) wegbewegt wird, während sich bei einer Bewegung des Verbindungselements (52) auf die Ruhelage (60) zu, der Drehantrieb (54) nicht dreht.

7. Sitzverstellvornchtung (10) nach einem der vorhergehenden Ansprüche, **dadurch gekennzeichnet, dass** der Ratschenmechanismus (56) nur einen Drehbereich (63) mit einer Freilaufeinrichtung aufweist, dessen Drehmoment-Übertragungsrichtung (66) mittels eines Schalters (68) umschaltbar ist.

8. Sitzverstellvornchtung (10) nach einem der vorhergehenden Ansprüche, **dadurch gekennzeichnet, dass** die Drehmoment-Übertragungsrichtung (66) des Ratschenmechanismus (56) mittels mindestens eines pneumatischen Linearaktuators (32) und/oder des elastischen Rückstellelements (80) umschaltbar ist.

9. Sitzverstellvorrichtung (10) nach einem der vorhergehenden Ansprüche, **dadurch gekennzeichnet, dass** der mindestens eine pneumatischen Linearaktuator (32) über eine Ventilanordnung (41, 82, 86, 90) mit einer Druckversorgung (84, 50) und einer elektronischen Steuereinheit (70) verbunden ist, um den mindestens einen pneumatischen Linearaktuator (32) mit einer vorgebbaren Frequenz abwechselnd mit einem Druck (42, 43) zu beaufschlagen und anschließend wieder zu entlüften.

10. Sitzverstellvorrichtung (10) nach einem der vorhergehenden Ansprüche, **dadurch gekennzeichnet, dass** die Druckversorgung (84, 50) einen Pumpenmotor (51) und/oder einen Druckspeicher (80) aufweist, die über eine oder mehrere Ventileinheiten (41, 82, 86, 90) mit dem mindestens eine pneumatischen Linearaktuator (32) verbunden sind.

11. Verfahren zum Betreiben einer Sitzverstellvorrichtung (10) - insbesondere nach einem der vorhergehenden Ansprüche - mit zwei relativ zueinander und/oder gegenüber einer Befestigungsfläche (12, 14) beweglich angeordneteren Sitzteilen (15,16, 17, 18, 19), die mit mindestens einem Ratschenmechanismus (56) miteinander verbunden sind, wobei der Ratschenmechanismus (56) einen beidseitig wirkenden Drehantrieb (54) aufweist, und der Drehantrieb (54) mittels eines Verbindungselements (52, 65, 72, 78) mit mindestens zwei einander entgegenwirkenden pneumatischen Linearaktuatoren (32) wirkverbunden ist, wobei diese derart angesteuert werden, dass sich der erste pneumatischen Linearaktuator (32) bei Beaufschlagung mit einem Druck (42, 43) axial zusammenzieht, während sich der zweite pneumatischen Linearaktuator (32) bei dessen Entlüftung ausdehnt.

12. Verfahren nach Anspruch 11, **dadurch gekennzeichnet, dass** zwei pneumatische Linearaktuatoren (32) zusammen mittels einer 4-Wege-3-Positionen-Ventileinheit (41, 82) angesteuert werden.

13. Verfahren nach Anspruch 11, **dadurch gekennzeichnet, dass** die einzelnen pneumatische Linearaktuatoren (32) jeweils mittels einer unabhängigen 3-Wege-3-Positionen-Ventileinheit (41, 86) oder einer 3-Wege-2-Positionen-Ventileinheit (41) angesteuert werden

14. Verfahren zum Betreiben einer Sitzverstellvorrichtung (10) - insbesondere nach einem der vorhergehenden Ansprüche 1-10 - mit zwei relativ zueinander und/oder gegenüber einer Befestigungsfläche (12, 14) beweglich angeordneteren Sitzteilen (15,16,17,18,19), die mittels mindestens einem, einen Drehantrieb (54) aufweisenden Ratschenmechanismus (56) miteinander verbunden sind, wobei der Ratschenmechanismus (56) eine neutrale Ruheposition (60) aufweist, in der die Bewegung der Sitzteile (15, 16, 17, 18, 19) gesperrt ist, und zwei Endpositionen (61, 62) für die beiden Drehrichtungen (66) aufweist, und der Drehantrieb (54) mit mindestens einem pneumatischen Linearaktuator (32) wirkverbunden ist, wobei dieser derart angesteuert wird, dass sich der pneumatischen Linearaktuator (32) für die eine Drehrichtung (66) zwischen seiner minimalen Länge und einem Bruchteil - insbesondere die Hälfte - seiner maximalen Länge (46) dehnt und zusammenzieht, während sich der pneumatischen Linearaktuator (32) für die entgegengesetzte Drehrichtung (66) zwischen dem Bruchteil - insbesondere der Hälfte - seiner maximalen Länge (46) und seiner maximale Länge (46) dehnt und zusammenzieht.

15. Verfahren zum Betreiben einer Sitzverstellvorrichtung (10) - insbesondere nach einem der vorhergehenden Ansprüche 1-10 - mit zwei relativ zueinander und/oder gegenüber einer Befestigungsfläche (12, 14) beweglich angeordneteren Sitzteilen (15, 16, 17, 18, 19), die mit mindestens einem Ratschenmechanismus (56) miteinander verbunden sind, wobei der Ratschenmechanismus (56) einen beidseitig wirkenden Drehantrieb (54) aufweist, und der Drehantrieb (54) mittels eines Verbindungselements (52, 65, 72, 78) mit mindestens einem pneumatischen Linearaktuator (32) und einem diesem entgegenwirkenden, elastischen Rückstellelement (80) verbunden ist, wobei das elastischen Rückstellelement (80) potentielle Energie aufnimmt während der pneumatischen Linearaktuator (32) mit einem Druck (42, 43) beaufschlagt wird und potentielle Energie abgibt, um den pneumatischen Linearaktuator (32) bei dessen Entlüftung in Axialrichtung (47) zu dehnen.

16. Verfahren nach einem der Ansprüche 11 bis 14, **dadurch gekennzeichnet, dass** der mindestens eine pneumatische Linearaktuator (32) zur Einstellung einer vorgebbaren-Längenausdehnung (48) mit einem Druckbegrenzungselement (88) betrieben wird.

## Claims

1. Seat adjusting device (10) - in particular for motor vehicle seats - with two seat parts (15, 16, 17, 18, 19) which are arranged movably relative to each other and/or in relation to a fastening surface (12, 14) and are connected to each other via at least one ratchet mechanism (56), wherein the ratchet mechanism (56) has a rotary drive (54) acting on both sides, **characterized in that** the rotary drive (54) is connected by means of a connecting element (52, 64, 72, 78) to at least one pneumatic linear actuator (52) which, when acted upon with a pressure (42, 43), contracts axially and thereby rotates the rotary drive (54).

2. Seat adjusting device (10) according to Claim 1, **characterized in that** the connecting element (52) is designed as a one-ended ratchet lever (64) or as a two-ended ratchet lever (78) or as a traction means (72) - such as, for example, a toothed belt (72) or a chain (72).

3. Seat adjusting device (10) according to either of Claims 1 and 2, **characterized in that** the connecting element (52) has opposite ends (75, 76), at each of which at least one pneumatic linear actuator (32) is arranged, with a plurality of pneumatic linear actuators (32) preferably being arranged approximately: parallel in the axial direction (47).

4. Seat adjusting device (10) according to one of the preceding claims, **characterized in that** at least two pneumatic linear actuators (32) are arranged, at a single end (65) of the connecting element (52), the longitudinal contractions of the two linear actuators (32) acting in opposite directions to each other

5. Seat adjusting device (10) according to one of the preceding claims,
**characterized in that** an elastic resetting element (80) is arranged on the connecting element (52) in particular at one end (65, 75, 76) thereof, said resetting element acting in the opposite direction to the longitudinal contraction of the at least one pneumatic linear actuator (32).

6. Seat adjusting device (10) according to one of the preceding claims, **characterized in that** the ratchet mechanism (56) has a neutral inoperative position (60) in which the movement of the seat parts (15) is blocked, and two end positions (61, 62) for the two directions of rotation (66), the rotary drive (54) in particular only rotating in accordance with the particular direction of rotation (66) when the connecting element (52) is moved away from the inoperative position (60) while the rotary drive (54) does not rotate during a movement of the connecting element (52) towards the inoperative position (60).

7. Seat adjusting device (10) according to one of the preceding claims, **characterized in that** the ratchet mechanism (56) has only one rotational region (63) with a freewheeling mechanism, the torque transmission direction (66) of which rotational region can be switched over by means of a switch (68).

8. Seat adjusting device (10) according to one of the preceding claims, **characterized in that** the torque transmission direction (66) of the ratchet mechanism (56) can be switched over by means of at least one pneumatic linear actuator (32) and/or the elastic resetting element (80).

9. Seat adjusting device (10) according to one of the: preceding claims, **characterized in that** the at least one pneumatic linear actuator (32) is connected via a valve arrangement (41, 82, 86, 90) to a pressure supply (84, 50) and an electronic control unit (70) in order in an alternating manner to act upon the at least one pneumatic linear actuator (32) at a predeterminable frequency with a pressure (42, 43) and subsequently to vent said linear actuator again.

10. Seat adjusting device (10) according to one of the preceding claims, **characterized in that** the pressure supply (84, 50) has a pump motor (51) and/or a pressure accumulator (80) which are/is connected via one or more valve units (41, 82, 86, 90) to the at least one pneumatic linear actuator (32).

11. Method for the operation of a seat adjusting device (10) - in particular according to one of the preceding claims - with two seat parts (15, 16, 17, 18, 19) which are arranged movably relative to each other and/or in relation to a fastening surface (12, 14) and are connected to each other by at least one ratchet mechanism (56), wherein the ratchet mechanism (56) has a rotary drive (54) acting on both sides, and the rotary drive (54) is operatively connected by means of a connecting element (52, 65, 72, 78) to at least two pneumatic linear actuators (32) acting in opposite directions to each other, wherein said linear actuators are activated in such a manner that, when acted upon with a pressure (42, 43), the first pneumatic linear actuator (32) contracts axially while, during the venting thereof, the second pneumatic linear actuator (32) expands.

12. Method according to Claim 11, **characterized in that** two pneumatic linear actuators (32) are activated together by means of a 4-way 3-position valve unit (41,82).

13. Method according to Claim 11, **characterized in that** the individual pneumatic linear actuators (32) are each activated by means of an independent 3-way 3-position valve unit (41, 86) or a 3-way 2-positions valve unit (41).

14. Method for the operation of a seat adjusting device (10) - in particular according to one of the preceding Claims 1-10 - with two seat parts (15, 16, 17, 18, 19) which are arranged movably relative to each other and/or in relation to a fastening surface (12, 14) and are connected to each other by means of at least one ratchet mechanism (56) having a rotary drive (54), wherein thee ratchet mechanism (56) has a neutral inoperative position (60) in which the movement of the seat parts (15, 16, 17, 18, 19) is blocked, and two end positions (61, 62) for the two directions of rotation (66), and the rotary drive (54) is operatively connected to at least one pneumatic linear actuator (32), wherein the latter is activated in such a manner that the pneumatic linear actuator (32) expands and contracts between its minimum length and a fraction - in particular half - of its maximum length (46) for the one direction of rotation (66), while the pneumatic linear actuator (32) expands and contracts between the fraction - in particular half - of its maximum length (46) and its maximum length (46) for the opposite direction of rotation (66).

15. Method for the operation of a seat adjusting device (10) - in particular according to one of the preceding claims 1-10 - with two seat parts (15, 16, 17, 18, 19) which are arranged movably relative to each other and/or in relation to a fastening surface (12, 14) and are connected to each other by at least one ratchet mechanism (56), wherein the ratchet mechanism (56) has a rotary drive (54) acting on both sides, and the rotary drive (54) is connected by means of a connecting element (52, 65, 72, 78) to at least one pneumatic linear actuator (32) and an elastic resetting element (80) acting in the opposite direction with respect to said linear actuator, wherein the elastic resetting element (80) absorbs potential energy while the pneumatic linear actuator (32) is acted upon with a pressure (42, 43), and outputs potential energy in order to expand the pneumatic linear actuator (32) in the axial direction (47) during the venting thereof.

16. Method according to one of Claims 11 to 14, **characterized in that** the at least one pneumatic linear actuator (32) is operated with a pressure-limiting element (88) in order to set a predeterminable length expansion (48).

## Revendications

1. Dispositif de positionnement de siège (10), notamment pour des sièges de véhicule, comprenant deux parties de siège (15, 16, 17, 18, 19) disposées de manière mobile l'une par rapport à l'autre et/ou par rapport à une surface de fixation (12, 14) et qui sont reliées ensemble par le biais d'au moins un mécanisme à cliquet (56), le mécanisme à cliquet (56) présentant un mécanisme d'entraînement rotatif (54) à action bilatérale, **caractérisé en ce que** le mécanisme d'entraînement rotatif (54) est relié activement au moyen d'un élément de liaison (52, 64, 72, 78) avec au moins un actionneur linéaire pneumatique (52) qui, lorsqu'il est soumis à une pression (42, 43), se contracte dans le sens axial et met ainsi le mécanisme d'entraînement rotatif (54) en rotation.

2. Dispositif de positionnement de siège (10) selon la revendication 1, **caractérisé en ce que** l'élément de liaison (52) est réalisé sous la forme d'un levier à cliquet à une extrémité (64) ou sous la forme d'un levier à cliquet à deux extrémités (78) ou encore sous la forme d'un moyen de traction (72), comme par exemple une courroie crantée (72) ou une chaîne (72).

3. Dispositif dé positionnement de siège (10) selon l'une des revendications 1 ou 2, **caractérisé en ce que** l'élément de liaisons (52) présenté des extrémités opposées (75, 76) sur lesquelles est à chaque fois disposé au moins un actionneur linéaire pneumatique (32), plusieurs actionneurs linéaires pneumatiques (32) étant disposés approximativement en parallèle de préférence dans le sens axial (47).

4. Dispositif de positionnement de siège (10) selon l'une des revendications précédentes, **caractérisés en ce qu'**au moins deux actionneurs linéaires pneumatiques (32) sont disposés à une seule extrémité (65) de l'élément de liaison (52), les deux actionneurs linéaires (32) agissant en opposition l'un de l'autre avec leur contraction longitudinale.

5. Dispositif de positionnement de siège (10) selon l'une des revendications précédentes, **caractérisé en ce qu'**un élément de rappel élastique (80) est disposé sur l'élément de liaison (52), notamment à une extrémité (65, 75, 76) de celui-ci, lequel s'oppose à la contraction longitudinale de l'au moins un actionneur linéaire pneumatique (32).

6. Dispositif de positionnement de siège (10) selon l'une des revendications précédentes, **caractérisé en ce que** le mécanisme à cliquet (56) présente une position de repos neutre (60) dans laquelle le mouvement des parties de siège (15) est bloqué et présente deux positions d'extrémité (61, 62) pour les deux sens de rotation (66), le mécanisme d'entraînement rotatif (54) ne tournant notamment conformément au sens de rotation (66) correspondant que lorsque l'élément de liaison (52) est éloigné de la position de repos (60), alors que lors d'un mouvement de l'élément de liaison (52) en direction de la position de repos (60), le mécanisme d'entraînement rotatif (54) ne tourne pas.

7. Dispositif de positionnement de siège (10) selon l'une des revendications précédentes, **caractérisé en ce que** le mécanisme à cliquet (56) ne présente qu'un seul sens de rotation (63) avec un dispositif de roue libre dont le sens de transmission du couple (66) peut être inversé au moyen d'un commutateur (68).

8. Dispositif de positionnement de siège (10) selon l'une des revendications précédentes, **caractérisé en ce que** le sens de transmission du couple (66) du mécanisme à cliquet (56) peut être inversé au moyen d'au moins un actionneur linéaire pneumatique (32) et/ou de l'élément de rappel élastique (80).

9. Dispositif de positionnement de siège (10) selon l'une des revendications précédentes, **caractérisé en ce que** l'au moins un actionneur linéaire pneumatique (32) est relié par le biais d'un arrangement de valves (41, 82, 86, 90) avec une source de pression (84, 50) et une unité de commande électronique (70) pour, en alternance, soumettre l'au moins un actionneur linéaire pneumatique (32) à une pression (42, 43) à une fréquence pouvant être prédéfinie et ensuite de nouveau le purger.

10. Dispositif de positionnement de siège (10) selon l'une des revendications précédentes, **caractérisé en ce que** la source de pression (84, 50) présente un moteur de pompe (51) et/ou un accumulateur de pression (80) relié(s) avec l'au moins un actionneur linéaire pneumatique (32) par le biais d'une ou plusieurs unités à valves (41, 82, 86, 90).

11. Procédé d'exploitation d'un dispositif de positionnement de siège (10), notamment selon l'une des revendications précédentes, comprenant, deux parties de siège (15, 16, 17, 18, 19) disposées de manière mobile l'une par rapport à l'autre et/ou par rapport à une surface de fixation (12, 14) et qui sont reliées ensemble par le biais d'au moins un mécanisme à cliquet (56), le mécanisme à cliquet (56) présentant un mécanisme d'entraînement rotatif (54) à action bilatérale et le mécanisme d'entraînement rotatif (54) étant relié activement au moyen d'un élément de liaison (52, 65, 72, 78) avec au moins deux actionneurs linéaires pneumatiques (32) agissant en opposition, ceux-ci étant commandés de telle sorte que le premier actionneur linéaire pneumatique (32), lorsqu' il est soumis à une pression (42, 43), se contracte dans le sens axial alors que le deuxième actionneur linéaire pneumatique (32) s'étire lors de sa purge.

12. Procédé selon la revendication 11, **caractérisé en ce que** les deux actionneurs linéaires pneumatiques (32) sont commandés conjointement au moyen d'une unité à valves à 4 voies et 3 positions (41, 82).

13. Procédé selon la revendication 11, **caractérisé en ce que** les actionneurs linéaires pneumatiques (32) individuels sont respectivement commandés au moyen d'une unité à valves à 3 voies et 3 positions (41, 86) ou d'une unité à valves à 3 voies et 2 positions (41) indépendante.

14. Procédé d'exploitation d'un dispositif de positionnement de siège (10), notamment selon l'une des revendications précédentes 1 à 10, comprenant deux parties de siège (15, 16, 17, 18, 19) disposées de manière mobile l'une par rapport à l'autre et/ou par rapport à une surface de fixation (12, 14) et qui sont reliées ensemble par le biais d'au moins un mécanisme à cliquet (56) présentant un mécanisme d'entraînement rotatif (54), le mécanisme à cliquet (56) présentant une position de repos neutre (60) dans laquelle le mouvement des parties de siège (15, 16, 17, 18, 19) est bloqué et présente deux positions d'extrémité (61, 62) pour les deux sens de rotation (66), et le mécanisme d'entraînement rotatif (54) étant relié activement avec au moins un actionneur linéaires pneumatique (32), celui-ci étant commandé de telle sorte que l'actionneur linéaire pneumatique (32), dans un sens de rotation (66), s'étire et se contracte entre sa longueur minimale et une fraction, notamment la moitié, de sa longueur maximale (46), alors que l'actionneur linéaire pneumatique (32), dans le sens de rotation (66) opposé, s'étire et se contracte entre la fraction,notamment la moitié,de sa longueur maximale (46) et sa longueur maximale (46).

15. Procédé d'exploitation d'un dispositif de positionnement de siège (10), notamment selon l'une des revendications précédentes 1 à 10, comprenant deux parties de siège (15, 16, 17, 18, 19) disposées de manière mobile l'une par rapport à l'autre et/ou par rapport à une surface de fixation (12, 14) et qui sont reliées ensemble par le biais d'au moins un mécanisme à cliquet (56), le mécanisme à cliquet (56) présentant un mécanisme d'entraînement rotatif (54) à action bilatérale et le mécanisme d'entraînement rotatif (54) étant relié au moyen d'un élément de liaison (52, 65, 72, 78) avec au moins un actionneur linéaire pneumatique (32) et avec un élément de rappel élastique (80) qui agit en opposition de celui-ci, l'élément de rappel élastique (80) absorbant de l'énergie potentielle pendant que l'actionneur linéaire pneumatique (32) est soumis à une pression (42, 43) et délivrant de l'énergie potentielle pour étirer l'actionneur linéaire pneumatique (32) dans le sens axial (47) lors de la purge de celui-ci.

16. Procédé selon l'une des revendications 11 à 14, **caractérisé en ce que** l'au moins un actionneur linéaire pneumatique (32) est utilisé avec un élément limiteur de pression (88) en vue de régler une extension longitudinale (48) pouvant être prédéfinie.
